# EUROPÄISCHE PATENTANMELDUNG

(11) **EP 4 501 891 A1**
(43) Veröffentlichungstag der Anmeldung: **05.02.2025**
(21) Anmeldenummer: 23189327.2
(22) Anmeldetag: 02.08.2023
(51) Int. Cl.: C04B 41/00, C04B 41/50, C04B 41/65, C04B 111/20

(54) **BETONKORROSION**

(71) Anmelder: Grillo Chemicals GmbH, 47169 Duisburg (DE)
(72) Erfinder: Tepper, Daniel, 47169 Duisburg (DE); Biertümpel, Ingo, 47169 Duisburg (DE); Volkmer, Christoph, 47169 Duisburg (DE); Thesing, Benedikt, 47169 Duisburg (DE)
(74) Vertreter: dompatent von Kreisler Selting Werner - Partnerschaft von Patent- und Rechtsanwälten mbB

(57) **Zusammenfassung**

Die vorliegende Erfindung betrifft eine Mischung zur Vermeidung der Ettringitbildung in Beton, die Verwendung einer solchen Mischung zur Ausbildung einer Sperrschicht gegen Sulfattreiben in Beton sowie Beton, der eine entsprechende Sperrschicht enthält.

## Beschreibung

Die vorliegende Erfindung betrifft eine Mischung zur Vermeidung der Ettringitbildung in Beton, die Verwendung einer solchen Mischung zur Ausbildung einer Sperrschicht gegen Sulfattreiben in Beton sowie Beton, der eine entsprechende Sperrschicht enthält.

Die Nutztierhaltung erfolgt üblicherweise in Ställen, deren Boden aus Beton gebildet ist. Bei der Dehydratation von Zement, also bei der Herstellung des Bodens, entsteht häufig Calciumsulfoaluminat (3CaO·Al₂O₃·3CaSO₄·32H₂O) welches auch als Ettringit bezeichnet wird. Zum Zeitpunkt der Herstellung also bei der Aushärtung ist die Ausbildung von Ettringit unschädlich.

Werden dem verhärteten Beton später erneut SO₄⁻-Ionen, zum Beispiel aus dem Grundwasser angeboten, kann es wieder zu Bildung von Ettringit kommen, wobei ein Kristallisationsdruck entsteht, der den Zementstein zertreiben kann. Dies wird dann als Sulfattreiben beschrieben. Bei der Haltung von Nutztieren werden unterschiedliche Zusätze zur Verbesserung des Tierwohls eingesetzt. Dabei kann es auch zu einem Kontakt mit der Betonoberfläche kommen. Er wurde bisher darauf geachtet, dass entsprechende Zusätze keine Sulfationen aufweisen. Es besteht somit Bedarf an der Bereitstellung eine Schutzschicht für Beton, welches ermöglicht, die Ettringitbildung, also das Sulfattreiben, in Beton, insbesondere im Rahmen der Nutztierhaltung, möglichst zu vermeiden.

Überraschenderweise hat sich gezeigt, dass eine Sulfat-enthaltende Mischung die Ausbildung einer Sperrschicht in Beton ermöglicht, sodass das Sulfattreiben verhindert wird. In einer ersten Ausführungsform wird die der vorliegenden Erfindung zugrunde liegende Aufgabe daher gelöst durch eine Mischung, die die Exkremente von Geflügel sowie Natriumsbisulfat umfasst zur Vermeidung der Ettringitbildung in Beton, wobei das Gewichtsverhältnis von Exkrementen zu Natriumsbisulfat 1:10 bis 10:1 beträgt.

Üblicherweise wird Natriumbisulfat (Natriumhydrogensulfat (NaHSO₄)) in sauren Reinigern verwendet, ebenso in der Lebensmittelindustrie und des Weiteren als pH-Wert Regulierer in diversen Bereichen. Kommt Beton mit Natriumsbisulfat in Kontakt, so ist eine Ettringitbildung zu beobachten.

Überraschenderweise hat sich nun gezeigt, dass wenn Natriumsbisulfat mit Exkrementen von Geflügeln kombiniert und die so erhaltene Mischung mit Beton in Kontakt gebracht wird, ein Sulfattreiben nicht zu beobachten ist. Im Gegenteil, es hat sich gezeigt, dass eine Sperrschicht ausgebildet wird, welche das Eindringen von Sulfationen in die Betonoberfläche beziehungsweise die Betonporen verhindert.

Bei den Exkrementen von Geflügeln handelt es sich insbesondere um Exkremente von Hühnern und/oder Puten.

In einer weiteren Ausführungsform wird die der vorliegenden Erfindung zu Grunde liegende Aufgabe gelöst durch die Verwendung einer Mischung aus Exkrementen von Geflügel und Natriumsbisulfat zur Ausbildung einer Sperrschicht gegen Sulfattreiben in Beton. Die Sperrschicht bildet sich insbesondere im Bereich der Oberfläche von Beton aus und reicht bis zu einer Tiefe von insbesondere 10 mm oder weniger. Vorzugsweise weist die Sperrschicht eine Dicke von 2 bis 5 mm aus befindet sich in einer Tiefe von 1 mm bis 8 mm, bevorzugt von 3 mm bis 7 mm.

Die Dicke der Sperrschicht sowie deren Eindringtiefe im Beton sind insbesondere von der Art des Betons und deren Porosität abhängig.

Die Sperrschicht bildet sich dadurch aus, dass man Beton mit einer Mischung wie zuvor beschrieben in Kontakt bringt. Insbesondere erfolgt das in Kontakt bringen dadurch, dass man eine wässrige Aufschlämmung der Mischung bereitstellt und diese mit dem Beton in Kontakt bringt. Dies kann dadurch erfolgen, dass die Aufschlämmung auf die Betonoberfläche aufgebracht wird. Es ist auch möglich, dass Beton in die Aufschlämmung eingetaucht wird.

Das Inkontaktbringen erfolgt so lange, bis es zur Ausbildung der Sperrschicht kommt. Diese ist von der genauen Beschaffenheit des Betons abhängig. Insbesondere erfolgt das Inkontaktbringen über einen Zeitraum von wenigstens 24 Stunden bis hin zu einer Woche. Ein längeres Inkontaktbringen führt nicht zur Ausbildung einer verbesserten Sperrschicht. Kürzere Kontaktzeiten können dazu führen, dass sich die Sperrschicht nicht vollständig ausbildet.

Bei Untersuchungen wurde festgestellt, dass im Bereich der Sperrschicht Kristalle vorliegen, die die Poren des Betons füllen. Es handelt sich hierbei jedoch nicht um sekundäre Ettringitbildung, da dieser Prozess eine drückende bis sprengende Wirkung auf das Betongefüge verursachen würde. Mikrodefekte oder Mikrorisse aus den gefüllten Poren heraus konnten jedoch nicht beobachtet werden. Vielmehr konnte durch EDX-Analysen nachgewiesen werden, dass die Poren des Betons mit Kalziumcarbonat gefüllt sind. Eine Ausbildung von Gips oder anderen treibenden Sulfaten liegt überraschenderweise nicht vor.

In einer weiteren Ausführungsform wird die der vorliegenden Erfindung zugrunde liegende Aufgabe gelöst durch Beton, wobei der Beton eine Sperrschicht gegen Ettringitbildung enthält, wobei diese Sperrschicht durch das Inkontaktbringen von Beton mit einer zuvor beschriebenen Mischung ermöglicht wird.

In den nachfolgenden Ausführungsbeispielen wird die vorliegende Erfindung in nicht limitierender Weise weiter erläutert.

### Ausführungsbeispiele

### Beispiel 1:

Es wurden in verschließbare Kunststoff-Eurobehälter der Größe 80 x 80 x 12 cm Betonproben mit Hühnerkot und Natriumbisulfat in Kontakt gebracht und anschließend analysiert.

Hierfür wurden in die Eurobehälter Betonplatten der Sorte C3037, die als Betonboden in Ställen Verwendung findet, getestet. Es sollte die zeitliche Schädigung des Betons durch Natrium-Bisulfat ermittelt werden. Je Betonsorte wurden dazu 4 unterschiedliche Versuche durchgeführt. Der Zeitraum der jeweiligen Behandlung betrug 41 Tage, was der durchschnittlichen Mastdauer von Geflügel entspricht.

Es wurden vier Eurobehälter mit Deckel der Fa. Auer Packaging bereitgestellt und folgendermaßen belegt:
Kiste 1: getrockneter Hühnerkot
Kiste 2: getrockneter Hühnerkot und Natriumbisulfat in einer Menge von 250 g/m²
Kiste 3: getrockneter Hühnerkot und Natriumbisulfat in einer Menge von 500 g/m²

Der Getrocknete Hühnerkot wurde von der Hochschule Osnabrück zur Verfügung gestellt. Es wurde Natriumbisulfat der Firma Grillo Werke AG (Handelsname: Improbed), Duisburg, Deutschland, verwendet. Die Kisten 1, 2 und 3 wurden mit getrocknetem Hühnerkot bis zu einer Höhe von 25 mm gefüllt. In die Kisten 2, 3 und 4 wurde die entsprechende Menge Natriumbisulfat verteilt.

Anschließend wurden die Kisten bis auf eine Füllhöhe von 50 mm mit Trinkwasser aufgefüllt.

In den Kisten wurden Beton-Probenkörper positioniert und verblieben dort für 41 Tage bei Raumtemperatur. Anschließend wurden die Probenkörper entfernt und mit Leitungswasser abgespült.

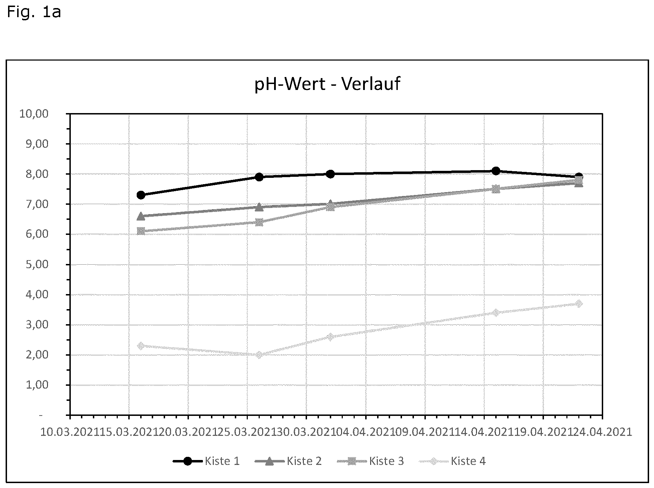

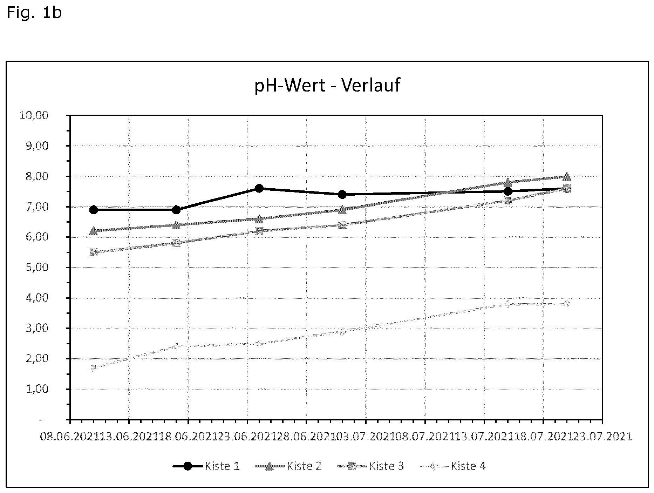

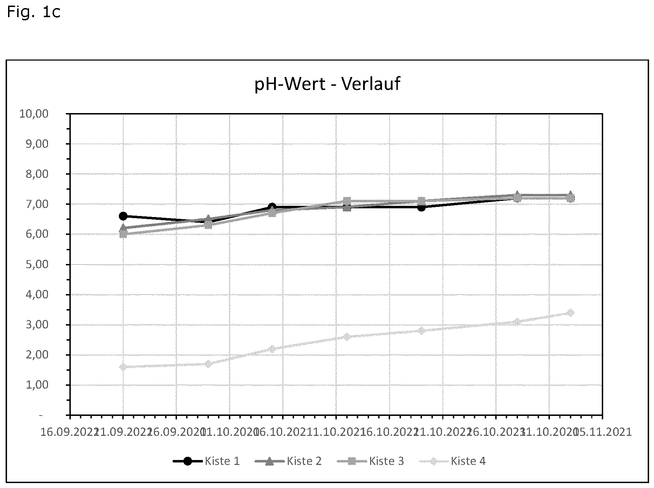

In den Kisten wurde durchgehend der pH-Wert gemessen, um den Verlauf über die 41 Tage zu dokumentieren. Die Ergebnisse sind in Fig. 1a, 1b und 1c dargestellt. Gezeigt sind die Ergebnisse aus 3 Versuchsdurchgängen. Es zeigt sich, dass der pH-Wert in den Kisten 1, 2 und 3 über den Zeitraum von 41 Tagen von einem Wert von 6-7 auf einen Wert von 7 bis 8 leicht ansteigt. In Kiste 4 betrug der pH-Wert initial etwa 2 und stieg dann auf etwa 4 an.

Es wurden Bohrmehlproben entnommen. Hierfür wurden Bohrungen in unterschiedlichen Tiefen der Probe vorgenommen und das erhaltene Bohrmehl analysiert. Dabei wurde der Sulfat-Gehalt wurde durch induktiv gekoppelte Plasma-Atom-Emissionsspektrometrie (DIN EN ISO 11885: 2009-09 (E22)) bestimmt. Dabei wurde der Sulfat-Gehalt in einer Tiefe von 0-10 mm der Probe, 10-20 mm der Probe und 20-30mm der Probe analysiert.

Bei allen Proben konnte im Bereich der Oberfläche (0-10mm) Sulfat nachgewiesen werden. Der Gehalt betrug etwa 10.000 bis 15.000 mg/kg bei einer initialen Bisulfat-Konzentration von 250 g/m² (Kiste 2) und etwa 17.000 bis 20.000 mg/kg bei einer initialen Bisulfat-Konzentration von 500 g/m² (Kiste 3).

Bei der 0-Probe (Vergleichsversuch, Kiste 1) wurde ein Gehalt von 7.500 mg/kg gemessen.

Bei den Proben, die in einer Tiefe von 10-20 mm von der Oberfläche ausgehend, bzw. von 20-30 mm entnommen wurden, war der Gehalt an Bisulfat in allen Proben gleich. Es konnte somit kein Bisulfat in tiefere Schichten des Betons vordringen.

Es hat sich somit überraschenderweise gezeigt, dass eine Kombination aus Exkrementen mit Natriumbisulfat zur Ausbildung einer Sperrschicht führt. Diese verhindert die Ettringitbildung auch bei porösen Beton-Oberflächen.

### Beispiel 2:

Es wurden Betonproben der Sieblinie AB16 mit einem Zementgehalt von 320 kg/m³ mit Hühnerkot und Wasser (jeweils 50 Vol.%) und 250 g/m² Natrium-bisulfat bzw. 500 g/m² Natriumbisulfat über einen Zeitraum von 4 Belastungszyklen mit jeweils 40 Tagen in Kontakt gebracht. Anschließend wurden die Proben mittels REM (ZEISS Gemini SEM 200 NanoVP Niedrigvakuum-REM) und EDX analysiert.

Es hat sich gezeigt, dass die Oberfläche der Betonproben aufgelockert erscheint. Darunter befindet sich eine verdichtete Schicht, in welcher die Poren des Betons mit Kalziumcarbonat gefüllt sind.

Ein Eindringen des Schwefels oder Natriums des Natriumbisulfats in den Beton erfolgte nicht. Die Elemente waren in der verdichteten Schicht des Betons noch angereichert.

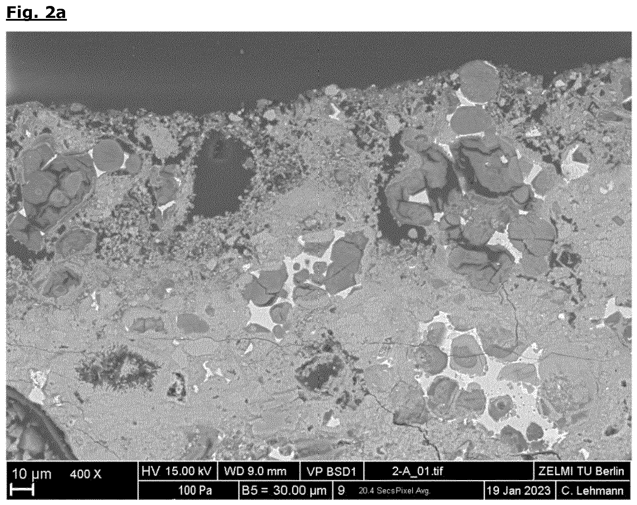

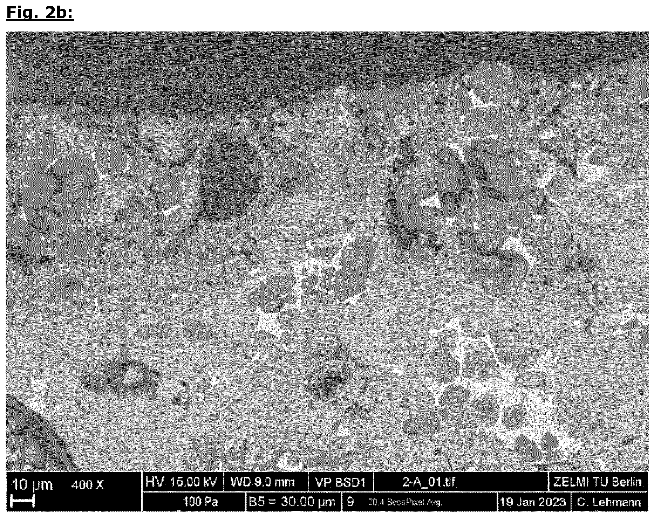

In Fig 2a ist eine REM-Aufnahme einer Probe gezeigt, welche mit Hühnerkot und Wasser (je 50 VOI.-%) und 250 g/m² Natriumbisulfat in Kontakt gebracht wurde. Bei Fig. 2b handelt es sich um die zugehörige EDX-Aufnahme der Probe. Die Ergebnisse der EDX-Messung sind in der nachfolgenden Tabelle dargestellt:

**Tabelle 1: Ergebnisse der EDX-Analyse gem. Fig. 2b; Angaben aller Werte in atom.-%**

| Messung | C | O | Na | Si | P | S | Ca |
|---|---|---|---|---|---|---|---|
| Porenfüllung 1 | 23,9 | 55,8 | 0,1 | 1,4 | 0,1 | 0,1 | 18,0 |
| Porenfüllung 2 | 23,5 | 56,7 | 0,1 | 2,3 | 0,0 | 0,0 | 16,2 |

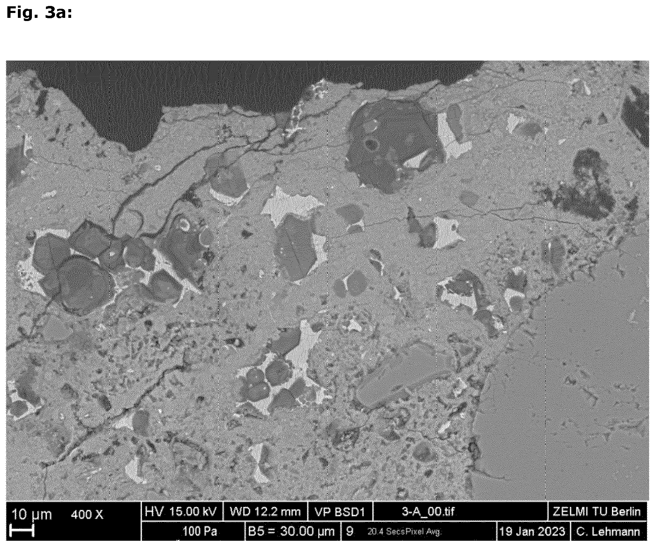

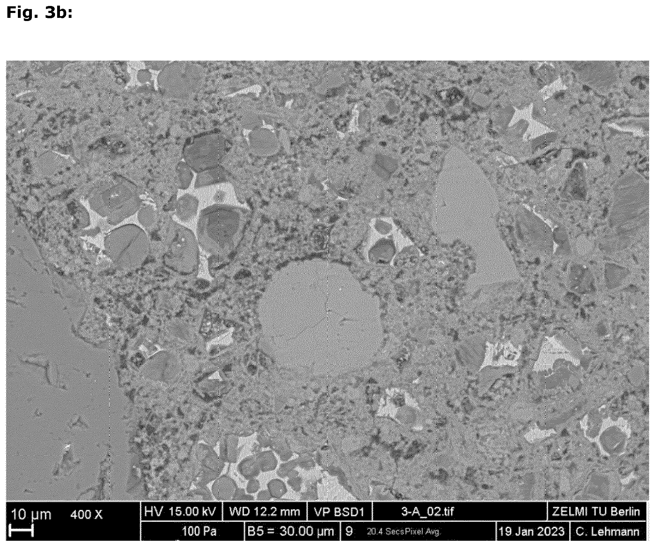

In Fig 3a ist eine REM-Aufnahme einer Probe gezeigt, welche mit Hühnerkot und Wasser (je 50 VOI.-%) und 500 g/m² Natriumbisulfat in Kontakt gebracht wurde. Bei Fig. 3b handelt es sich um die zugehörige EDX-Aufnahme der Probe. Die Ergebnisse der EDX-Messung sind in der nachfolgenden Tabelle dargestellt:

**Tabelle 2: Ergebnisse der EDX-Analyse gem. Fig. 3b; Angaben aller Werte in atom.-%**

| Messung | C | O | Na | Si | P | S | Ca |
|---|---|---|---|---|---|---|---|
| Porenfüllung 1 | 22,0 | 57,9 | 0,1 | 1,9 | 0,0 | 0,1 | 17,5 |
| Porenfüllung 2 | 21,3 | 58,4 | 0,1 | 2,1 | 0,0 | 0,1 | 17,6 |

Die Proben wurden für die EDX-Analyse mit Imprägnierharz behandelt. Daher ist der Kohlenstoffgehalt, wie üblich, erhöht.

## Patentansprüche

1. Mischung umfassend Exkremente von Geflügeln sowie Natriumbisulfat zur Vermeidung der Ettringitbildung in Beton, wobei das Gewichtsverhältnis von Exkrementen zu Natriumbisulfat 1:10 bis 10:1 beträgt.

2. Verwendung einer Mischung nach Anspruch 1 zur Ausbildung einer Sperrschicht gegen Sulfattreiben in Beton.

3. Verwendung nach Anspruch 2, **dadurch gekennzeichnet, dass** die Sperrschicht im Bereich der Oberfläche bis zu einer Tiefe von 10 mm oder weniger ausgebildet wird.

4. Verwendung nach Anspruch 2 oder 3, **dadurch gekennzeichnet, dass** die Sperrschicht durch Ausbildung von Kristallen entsteht.

5. Verwendung nach zumindest einem der Ansprüche 2 bis 4, **dadurch gekennzeichnet, dass** man die Sperrschicht erhält, in dem man Beton mit einer Mischung gemäß Anspruch 1 in Kontakt bringt.

6. Verwendung nach Anspruch 5, **dadurch gekennzeichnet, dass** die Mischung in Form einer Aufschlämmung, insbesondere einer wässrigen Aufschlämmung vorliegt.

7. Beton enthaltend eine Sperrschicht gegen Ettringitbildung erhalten durch das Inkontaktbringen von Beton mit einer Mischung gemäß Anspruch 1.

8. Beton nach Anspruch 7, **dadurch gekennzeichnet, dass** das Inkontaktbringen über einen Zeitraum von 24 h bis 1 Woche erfolgt.
